# EUROPÄISCHE PATENTSCHRIFT

(11) **EP 0 935 545 B1**
(45) Veröffentlichungstag und Bekanntmachung des Hinweises auf die Patenterteilung: **02.01.2004**
(21) Anmeldenummer: 98951233.0
(22) Anmeldetag: 29.08.1998
(51) Int. Cl.: B60S 1/04, B60S 1/34

(54) **WISCHERANLAGE**
WIPER SYSTEM
SYSTEME D'ESSUIE-GLACE

(30) Priorität: 11.09.1997 DE 19739842
(43) Veröffentlichungstag der Anmeldung: 18.08.1999
(73) Patentinhaber: ROBERT BOSCH GMBH, 70442 Stuttgart (DE)
(72) Erfinder: SCHABANEL, François, F-94100 Saint Maux des Fossés (FR); KOTLARSKI, Thomas, D-77830 Bühlertal (DE); REISS, Jürgen, D-85049 Ingolstadt (DE)
(86) Internationale Anmeldenummer: PCT/DE1998/002545
(87) Internationale Veröffentlichungsnummer: WO 1999/012782

(56) Entgegenhaltungen:
- FR-A- 2 749 243
- US-A- 5 507 585
- PATENT ABSTRACTS OF JAPAN vol. 097, no. 005, 30. Mai 1997 & JP 09 024800 A (ASMO CO LTD), 28. Januar 1997
- PATENT ABSTRACTS OF JAPAN vol. 095, no. 004, 31. Mai 1995 & JP 07 017365 A (KATO HATSUJO KAISHA LTD;OTHERS: 01), 20. Januar 1995

## Beschreibung

### Stand der Technik

Die Erfindung geht aus von einer Wischeranlage nach dem Oberbegriff des Anspruchs 1.

Üblicherweise treibt ein Wischerantrieb einer Wischeranlage über ein Gestänge ein oder mehrere in Wischerlagern gelagerte Abtriebswellen an, auf denen Wischer befestigt sind. Die Abtriebswellen ragen aus Öffnungen einer Kraftfahrzeugkarosserie und bewegen die Wischer über eine Windschutzscheibe des Kraftfahrzeugs. Um die einzelnen Bauteile oder vormontierte Baugruppen der Wischeranlage günstig am Kraftfahrzeug montieren zu können, werden vorzugsweise Wischerantrieb, Gestänge, Wischerlager und die Abtriebswellen an einer Platine vormontiert.

Anschließend wird die vormontierte Wischeranlage an der Fahrzeugkarosserie entsprechend positioniert und befestigt. Dabei werden meist die Wischerlager durch Montageöffnungen geführt, die entweder direkt in der Fahrzeugkarosserie oder in zusätzlichen Montageblechen eingebracht sein können. Anschließend werden die Wischerlager an der Fahrzeugkarosserie bzw. den Montageblechen befestigt.

Um die Montage zu unterstützten, werden zusätzliche Haltebleche verwendet. Diese reichen jedoch meist nicht aus, die Wischeranlage komplett und sicher zu halten. Daher muß die Wischeranlage während der Montage mit einer Hand in der entsprechenden Position gehalten werden, während mit der anderen Hand die Wischerlager an den Montageblechen befestigt werden. Ferner stellen die Haltebleche zusätzliche Bauteile dar, die montiert oder entsprechend angeordnet und nach der Montage wieder entfernt werden müssen, was mit zusätzlichem Aufwand und Kosten verbunden ist.

Aus der JP-A-09-024 800 ist ein Wischerlager bekannt, das bei der Montage vorübergehend durch ein ringförmiges Riegelelement gehalten wird. Dieses greift in eine Ringnut eines Stützkörpers des Wischerlagers ein und stützt sich über elastische Eingriffsteile am Rand der Montagebohrung ab. Werden die Eingriffsteile durch die Montageöffnung geschoben, geben sie nach innen nach und spreizen sich wieder, sobald sie die Montageöffnung passiert haben. Um eine leichte Montage zu ermöglichen, müssen die Eingriffsteile ausreichend elastisch sein, andererseits müssen sie stark genug sein, um auch schwere Wischeranlagen sicher zu halten. Bei diesen Anforderungen lässt es sich nicht vermeiden, dass Schwingungen von der Wischeranlage auf die Karosserie übertragen werden und störende Geräusche verursachen.

### Vorteile der Erfindung

Nach der Erfindung greift ein Hakenteil in eine Ausnehmung am Umfang des Wischerlagers ein und ist durch einen Haltering aus elastischem Material in der Ausnehmung gehalten. Das Hakenteil ist um einen Drehpunkt am Wischerlager kippbar und ist dabei mit dem entgegen der Montagerichtung weisenden Ende gegen den Haltering radial nach außen und mit dem in Montagerichtung weisenden Ende radial nach innen schwenkbar.

Bei der Montage schwenkt das Hakenteil mit dem entgegen der Montagerichtung weisenden Ende um den Drehpunkt gegen den Haltering radial nach außen, wobei der elastische Haltering nachgibt, der das Hakenteil in die Vertiefung drückt, so dass der Haken durch die Montageöffnung geschoben werden kann. Das Hakenteil kann dabei so fest dimensioniert werden, dass es bei der Montage selbst schwere Wischeranlagen sicher in der Montageöffnung hält, indem eine unmittelbare formschlüssige Verbindung über das Hakenteil zwischen dem Wischerlager und der Karosserie besteht. Da der Haken nur eine geringe Elastizität aufzuweisen hat, hebt er sich bei der endgültigen Montage von der Karosserie ab, so dass die Wischeranlage bzw. das Wischerlager durch den elastischen Haltering von der Karosserie schwingungsisoliert ist und keine Geräusche entstehen bzw. auf die Karosserie übertragen werden können. Zur endgültigen Montage kann der Monteur beide Hände benutzen, ohne die Wischeranlage mit einer Hand halten zu müssen. Die Montage wird dadurch einfacher, schneller, sicherer, für den Monteur angenehmer und damit insgesamt kostengünstiger. Zusätzliche Haltebleche und deren Montage entfallen.

Vorteilhaft sind ein oder mehrere Hakenteile, die unmittelbar am Umfang des Wischerlagers im Bereich der Montageöffnung befestigt sind und den Rand in Montagerichtung hintergreifen. Die Hakenteile können gemeinsam mit den Bauteilen der Wischeranlage vormontiert werden. Der vorhandene Rand der Montageöffnung wird zusätzlich als Einrastkante genutzt. Nachdem die Wischerlager mit ihren Rastverbindungen in die Montagelöcher eingerastet sind, sind sie besonders sicher und genau fixiert und können günstig an den Montageblechen vollständig befestigt werden.

Vorzugsweise wird die Platine, z.B. eine Rohrplatine, über einen Anlagebund am Wischerlager und über ein ringförmiges Dämpfungselement auf dem Anlagebund am Rand der Montageöffnung in Montagerichtung abgestützt. Das Dämpfungselement wird standardmäßig zwischen Fahrzeugkarosserie und Wischeranlage eingebaut, um zu verhindern, daß Schwingungen und Geräusche von dem Bauteil auf die Fahrzeugkarosserie übertragen werden. Nach einer Ausgestaltung der Erfindung kann das Dämpfungselement gleichzeitig als Haltering eingesetzt werden. Dadurch kann ein zusätzlicher Haltering entfallen, so dass ein Bauteil eingespart wird. Das ringförmige Dämpfungselement besteht zudem häufig aus elastischem Material und kann dadurch die elastische Funktion der Rastverbindung bzw. des Halterings übernehmen.

Abhängig von der Stabilität der Hakenteile und der Gleichgewichtslage der Wischeranlage sind ein oder mehrere Hakenteile pro Wischerlager anzuordnen. Für einen sicheren Halt unabhängig von der Gleichgewichtslage, empfiehlt es sich jedoch, mindestens zwei Hakenteile pro Wischerlager vorzusehen, die günstig gegenüberliegend angeordnet sind.

Um die Handhabung und die Montage der Hakenteile am Wischerlager zu erleichtern, sind diese am Haltering befestigt oder die Hakenteile mit dem Haltering oder dem Dämpfungselement einstückig ausgeführt. Dadurch reduziert sich die Anzahl der Bauteile und der Montageaufwand. Grundsätzlich kann der Haltering geschlossen, offen oder auch in zwei oder mehrere Teile geteilt sein und kann je nach Ausführung seitlich oder von der der Montageöffnung zugewandten Seite aus auf das Wischerlager aufgeschoben werden.

Um zu vermeiden, daß Körperschall, insbesondere vom Wischerantrieb über die Wischerlager und über die Hakenteile auf den Rand der Montageöffnung bzw. auf die Karosserie des Kraftfahrzeugs übertragen wird, besitzen die Hakenteile vorzugsweise nach Abschluß der Montage einen Abstand zu dem Rand der Montageöffnung.

### Zeichnung

In der Zeichnung sind Ausführungsbeispiele der Erfindung dargestellt. In der Beschreibung und in den Ansprüchen sind zahlreiche Merkmale im Zusammenhang dargestellt und beschrieben. Der Fachmann wird die Merkmale zweckmäßigerweise auch einzeln betrachten und zu weiteren sinnvollen Kombinationen zusammenfassen.

Es zeigen:
- Fig. 1: eine Wischeranlage,
- Fig. 2: einen Ausschnitt der Schnittebene entlang der Linie II-II in Fig. 1 durch ein Hakenteil,
- Fig. 3: ein Hakenteil nach Fig. 2 bei der Montage,
- Fig. 4: ein Hakenteil im Haltezustand bei der Montage,
- Fig. 5: ein Hakenteil nach vollständig befestigter Wischeranlage,
- Fig. 6: einen Haltering mit zwei gegenüberliegenden Hakenteilen,
- Fig. 7: einen Schnitt entlang der Linie VII-VII in Fig. 6 und
- Fig. 8: ein einstückiges Dämpfungselement und Hakenteil.

### Beschreibung der Ausführungsbeispiele

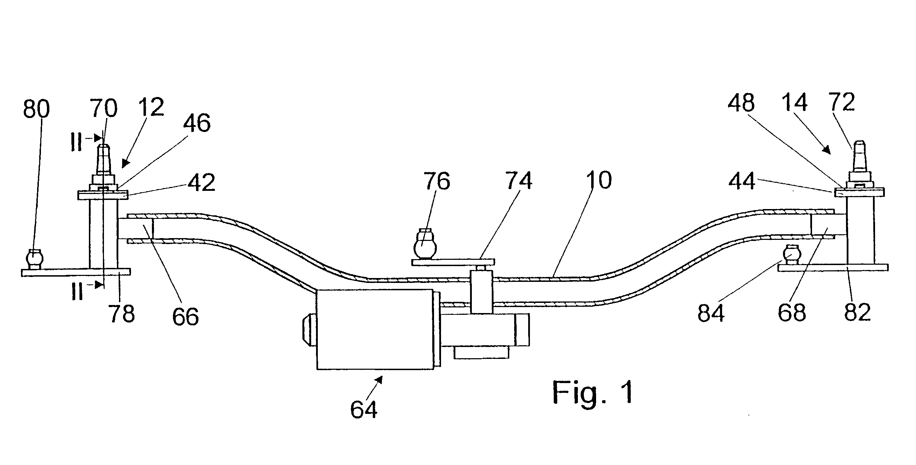

Fig. 1 zeigt eine Wischeranlage mit einer Platine in Form einer Rohrplatine 10, an der ein Wischerantrieb 64 und zwei Wischerlager 12, 14 befestigt sind. Die Wischerlager 12, 14 sind seitlich mit zylindrischen Befestigungsteilen 66, 68 mit Übermaß in die Rohrplatine 10 eingepreßt oder die Rohrplatine 10 ist im Bereich der Befestigungsteile 66, 68 verkrimmpt. Es sind jedoch auch andere Befestigungsarten der Wischerlager 12, 14 möglich. In den Wischerlagern 12, 14 sind Abtriebswellen 70, 72 gelagert, die vom Wischerantrieb 64 über eine Kurbel 74 und eine Gelenkkugel 76 am Wischerantrieb 64, über ein nicht näher dargestelltes Gestänge und jeweils über eine Kurbel 78, 82 und eine Gelenkkugel 80, 84 am Wischerlager 12, 14 angetrieben werden.

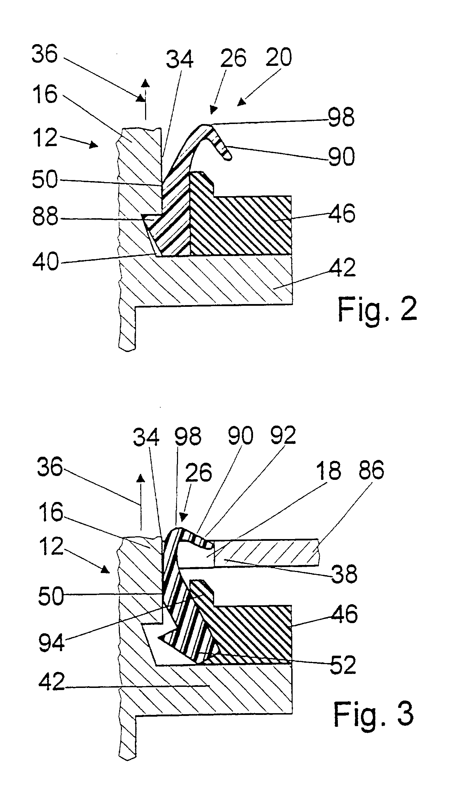

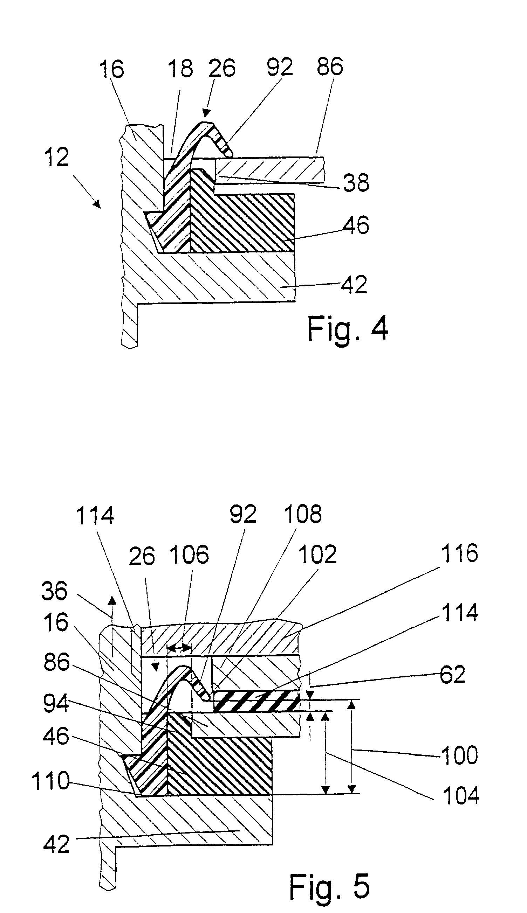

Bei der Montage der Wischeranlage werden die Abtriebswellen 70, 72 und ein Teil 16 der Wischerlager 12, 14 durch eine Montageöffnung 18 in einem Montageblech 86 geschoben, so daß die Abtriebswellen 70, 72 aus der Montageöffnung 18 an der Fahrzeugkarosserie ragen (Fig. 3). Die Montageöffnung 18 kann auch anstatt in einem Montageblech 86 direkt in der Fahrzeugkarosserie eingebracht sein. Auf dem durchgeschobenen Teil 16 des Wischerlagers 12, 14 befindet sich ein nicht näher dargestelltes Gewinde, auf das von Seiten der Abtriebswellen 70, 72 eine Mutter geschraubt wird. Die Wischerlager 12, 14 werden dadurch in die Montageöffnungen 18 gezogen, bis am äußeren Umfang 34 der Wischerlager 12, 14 angeordnete Anlagebünde 42, 44 sich in Montagerichtung 36 über ein Dämpfungselement 46, 48 am Montageblech 86 abstützen, wodurch die Wischeranlage befestigt ist (Fig. 1 und 5). Außer den Anlagebünden 42, 44 sind auch andere dem Fachmann geläufige Anschlagelemente möglich, über die sich die Wischeranlage abstützen kann. Anschließend werden auf den Abtriebswellen 70, 72 Wischer befestigt, die von den Abtriebswellen 70, 72 angetrieben über eine Windschutzscheibe des Kraftfahrzeugs bewegt werden.

Erfindungsgemäß sind an den Wischerlagern 12, 14 oberhalb der Anlagebünde 42, 44 Rastverbindungen 20, 22, 24 angeordnet, die einrasten, sobald die Wischerlager 12, 14 in die Montageöffnungen 18 geschoben werden (Fig. 2 bis 8). Die Wischeranlage wird von den Rastverbindungen 20, 22, 24 sicher gehalten, ohne daß sie zusätzlich von einem Monteur gehalten werden muß. Die Rastverbindungen 20, 22, 24 werden vorzugsweise durch am Umfang der Wischerlager 12, 14 befestigte Hakenteile 26, 28, 30, 32 gebildet.

Das in Fig. 2 dargestellte Hakenteil 26 wird über das Dämpfungselement 46 mit einem Vorsprung 88 in eine Ausnehmung 40 am äußeren Umfang 34 des Wischerlagers 12 gedrückt und dadurch formschlüssig am Umfang 34 des Wischerlagers 12 befestigt. Wird das Wischerlager 12 durch die Montageöffnung 18 geschoben (Fig. 3), kommt das Montageblech 86 mit einer Schrägen 90 des Hakenteils 26 in Kontakt und kippt dieses mit dem in Montagerichtung 36 weisenden Ende 98 um einen Drehpunkt 50 am Umfang 34 des Wischerlagers 12 bis der Haken 92 des Hakenteils 26 durch die Montageöffnung 18 paßt. Durch die Kippbewegung des Hakenteils 26 wird das zum Anlagebund 42 weisende Ende 52 des Hakenteils 26 radial nach außen gegen das Dämpfungselement 46 ausgelenkt, welches dabei elastisch verformt wird. Ist der Haken 92 durch die Montageöffnung 18 geschoben, wird das Hakenteil 26 durch das Dämpfungselement 46 in seine Ausgangsstellung zurück gestellt (Fig. 4). Der Haken 92 rastet mit einem hörbaren Geräusch am Rand 38 des Montageblechs 86 ein. Die Wischeranlage ist für den Monteur durch das Einrastgeräusch erkennbar in ihrer Position gesichert.

Anschließend kann das Wischerlager 12 in der Montageöffnung 18 mit einer Mutter 116 verschraubt werden, die entgegen der Montagerichtung 36 auf ein Gewinde 114 auf das Wischerlager 12 geschraubt wird. Um das Hakenteil 26 dabei nicht zu beschädigen, kann sich beispielsweise die Mutter über eine Unterlegscheibe 108 mit integriertem Entkopplungselement 112 aus Gummi direkt am Montageblech 86 abstützen, in deren Innenumfang das Hakenteil 26 paßt und die dicker ist als der über das Montageblech 86 ragende Teil des Hakenteils 26. Möglich ist auch, daß sich die Mutter an einem anderen Bauteil abstützt.

Damit kein Körperschall von der Wischeranlage über das Wischerlager 12 und über das Hakenteil 26 auf das Montageblech 86 und dann auf die Karosserie übertragen wird, ist der Abstand 100 zwischen der unteren Kante 102 des Hakens 92 und der unteren Anlagefläche 110 des Hakenteils 26 größer als die gemeinsame Stärke 104 von dem Montageblech 86 und dem Dämpfungselement 46. Wird das Wischerlager 12 verschraubt, wird es weiter in die Montageöffnung 18 gezogen. Der Haken 92 des Hakenteils 26 löst sich mit der unteren Kante 102 vom Montageblech 86, wodurch ein axialer Abstand 62 zwischen Hakenteil 26 und dem Montageblech 86 entsteht. Ferner besitzt das Dämpfungselement 46 einen Zentrierring 94, der das Wischerlager 12 in der Montageöffnung 18 zentriert und sicher stellt, daß sich neben dem axialen ein radialer Abstand 106 zwischen Montageblech 86 und dem Hakenteil 26 einstellt.

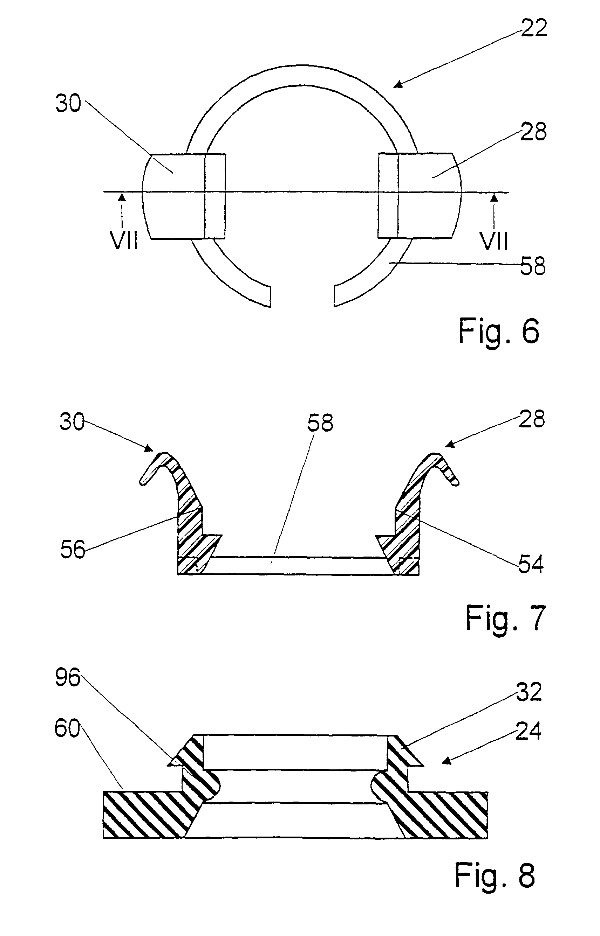

An den Wischerlagern 12, 14 können je nach Belastung ein oder mehrere Hakenteile über den Umfang verteilt angeordnet sein. Vorzugsweise werden jedoch zwei gegenüberliegende Hakenteile 28, 30 pro Wischerlager 12, 14 vorgesehen. Um die Montage der Hakenteile 28, 30 zu erleichtern, sind diese in einer Ausgestaltung der Erfindung an einem Haltering 58 befestigt (Fig. 6). Der Haltering 58 kann ausschließlich dazu dienen, ein oder mehrere Hakenteile 28, 30 günstig am Wischerlager 12, 14 zu befestigen. Ferner kann er als Federring ausgeführt sein, der die Hakenteile 28, 30 in die Ausnehmung 40 drückt und elastisch bei der Montage ausgelenkt wird. Fig. 7 zeigt einen Schnitt entlang der Linie VII-VII. Bei der Montage werden die Hakenteile 28, 30 wiederum um Drehpunkte 54, 56 gekippt.

In der erfindungsgemäßen Ausgestaltung nach Fig. 8 sind das Hakenteil 32 und das Dämpfungselement 60 einstückig ausgeführt. Das Hakenteil 32 bildet ein über den Umfang geschlossenen Haltering, möglich sind auch über den Umfang mehrere verteilte Hakenteile. Das Hakenteil 32 und das Dämpfungselement 60 werden gemeinsam über eine Wulst 96 in einer Ausnehmung formschlüssig am Wischerlager befestigt. Bei der Montage wird das Hakenteil 32 elastisch ausgelenkt.

## Patentansprüche

1. Wischeranlage mit einem Wischerlager (12, 14), das im vormontierten Zustand zu einem Teil (16) durch eine Montageöffnung (18) eines Kraftfahrzeugs geführt und bis zur endgültigen Montage über eine Rastverbindung (20, 22, 24) in der Montageöffnung (18) gehalten ist, wobei mindestens ein Hakenteil (26, 28, 30, 32) durch Formschluss am äußeren Umfang (34) des Wischerlagers (12, 14) befestigt und in Montagerichtung (36) am Rand (38) der Montageöffnung (18) einrastbar ist, **dadurch gekennzeichnet, dass** das Hakenteil (26, 28, 30, 32) in eine Ausnehmung (40) am Umfang (34) des Wischerlagers (12, 14) eingreift und durch einen Haltering (46, 48, 58) aus elastischem Material in der Ausnehmung (40) gehalten ist, wobei das Hakenteil (26, 28, 30) um einen Drehpunkt (50, 54, 56) am Wischerlager (12, 14) kippbar ist und dabei mit dem entgegen der Montagerichtung weisenden Ende (52) gegen den Haltering (46, 48, 58) radial nach außen und mit dem in Montagerichtung (36) weisenden Ende (98) radial nach innen schwenkbar ist.

2. Wischeranlage nach Anspruch 1, **dadurch gekennzeichnet, dass** der Haltering (46, 48, 60) als Dämpfungselement auf einem Anlagebund (42, 44) angeordnet ist, über den sich das Wischerlager (12, 14) im montierten Zustand am Rand (38) der Montageöffnung (18) in Montagerichtung (36) abstützt.

3. Wischeranlage nach einem der Ansprüche 1 oder 2, **dadurch gekennzeichnet, dass** zwei zum Wischerlager (12, 14) diametral liegende Hakenteile (28, 30) vorgesehen sind.

4. Wischeranlage nach einem der Ansprüche 1 bis 3, **dadurch gekennzeichnet, dass** das Hakenteil (28, 30, 32) und der Haltering (46, 48, 58, 60) fest verbunden sind.

5. Wischeranlage nach Anspruch 4, **dadurch gekennzeichnet, dass** das Hakenteil (32) und das Dämpfungselement (60) einstückig ausgeführt sind.

6. Wischeranlage nach einem der Ansprüche 1 bis 5, **dadurch gekennzeichnet, dass** das Hakenteil (26, 28, 30, 32) im montierten Zustand einen Abstand (62, 106) zum Rand (38) der Montageöffnung (18) aufweist.

## Claims

1. Wiper system having a wiper bearing (12, 14) which, in the preinstalled state, is led through an installation opening (18) of a motor vehicle to a part (16) and is held in the installation opening (18) by means of a latching connection (20, 22, 24) until its final installation, at least one hook part (26, 28, 30, 32) being held on the outer circumference (34) of the wiper bearing (12, 14) with a form-fitting connection and it being possible to latch the said at least one hook part (26, 28, 30, 32) in the installation direction (36) on the edge (38) of the installation opening (18), **characterized in that** the hook part (26, 28, 30, 32) engages in a recess (40) on the circumference (34) of the wiper bearing (12, 14) and is held in the recess (40) by a holding ring (46, 48, 58) made from elastic material, it being possible to tilt the hook part (26, 28, 30) about a rotational point (50, 54, 56) on the wiper bearing (12, 14) and it being possible in the process to pivot its end (52), pointing counter to the installation direction, in a radially outward direction against the holding ring (46, 48, 58) and to pivot its end (98), pointing in the installation direction (36), in a radially inward direction.

2. Wiper system according to Claim 1, **characterized in that** the holding ring (46, 48, 60) is arranged as a damping element on a bearing collar (42, 44), by means of which the wiper bearing (12, 14), in the installed state, is supported in the installation direction (36) on the edge (38) of the installation opening (18).

3. Wiper system according to either of Claims 1 and 2, **characterized in that** two hook parts (28, 30) are provided which lie diametrically with respect to the wiper bearing (12, 14).

4. Wiper system according to one of Claims 1 to 3, **characterized in that** the hook part (28, 30, 32) and the holding ring (46, 48, 58, 60) are firmly connected.

5. Wiper system according to Claim 4, **characterized in that** the hook part (32) and the damping element (60) are of one-piece design.

6. Wiper system according to one of Claims 1 to 5, **characterized in that**, in the installed state, the hook part (26, 28, 30, 32) is at a distance (162, 100) from the edge (38) of the installation opening (18).

## Revendications

1. Installation d'essuie-glace comportant un palier d'essuie-glace (12, 14) qui est conduit à travers un orifice de montage (18) d'un véhicule automobile à l'état pré-assemblé pour former une pièce (16) et qui est maintenu jusqu'au montage définitif par l'intermédiaire d'une liaison par encliquetage (20, 22, 24) dans l'orifice de montage (18),
au moins une pièce en forme de crochet (26, 28, 30, 32) étant fixée par une liaison de forme à la périphérie extérieure (34) du palier d'essuie-glace (12, 14) et s'accroche dans la direction de montage (36) contre le bord (38) de l'orifice de montage (18),
**caractérisée en ce que**
la pièce en forme de crochet (26, 28, 30, 32) vient prendre dans une cavité (40) à la périphérie (34) du palier d'essuie-glace (12, 14) et est maintenue par une bague de fixation (46, 48, 58) en matière élastique dans la cavité (40),
la pièce en forme de crochet (26, 28, 30) pouvant basculer contre le palier d'essuie-glace (12, 14) autour d'un point de rotation (50, 54, 56) et basculer radialement vers l'extérieur par son extrémité (52) tournée dans la direction opposée à la direction de montage contre la bague de fixation (46, 48, 58) radialement vers l'extérieur et par son extrémité (98) tournée dans la direction de montage (36), radialement vers l'intérieur.

2. Installation selon la revendication 1,
**caractérisée en ce que**
la bague de fixation (46, 48, 60) est prévue comme élément amortisseur sur une collerette de fixation (42, 44) par laquelle le palier d'essuie-glace (12, 14) à l'état monté s'appuie contre le bord (38) de l'orifice de montage (18) dans le sens du montage (36).

3. Installation selon l'une des revendications 1 ou 2,
**caractérisée par**
deux pièces en forme de crochet (28, 30) diamétralement opposées prévues sur le palier d'essuie-glace (12, 14).

4. Installation selon l'une des revendications 1 à 3,
**caractérisée en ce que**
la pièce en forme de crochet (28, 30, 32) et la bague de fixation (46, 48, 58, 60) sont reliées solidairement.

5. Installation selon la revendication 4,
**caractérisée en ce que**
la pièce en forme de crochet (32) et l'élément amortisseur (60) sont réalisés en une seule pièce.

6. Installation selon l'une des revendications 1 à 5,
**caractérisée en ce que**
la pièce en forme de crochet (26, 28, 30, 32) présente à l'état monté une certaine distance (62, 106) par rapport au bord (38) de l'orifice de montage (18).
